# EUROPÄISCHE PATENTSCHRIFT

(11) **EP 3 880 119 B1**
(45) Veröffentlichungstag und Bekanntmachung des Hinweises auf die Patenterteilung: **31.05.2023**
(21) Anmeldenummer: 19782901.3
(22) Anmeldetag: 24.09.2019
(51) Int. Cl.: A61C 15/02, A46B 3/00

(54) **INTERDENTAL-REINIGER**
INTERDENTAL CLEANER
DISPOSITIF DE NETTOYAGE INTERDENTAIRE

(30) Priorität: 14.11.2018 DE 102018008963
(43) Veröffentlichungstag der Anmeldung: 22.09.2021
(73) Patentinhaber: Sunstar Suisse S.A., 1163 Etoy (CH)
(72) Erfinder: BUTZ, Jürgen, 79694 Utzenfeld (DE)
(74) Vertreter: Lichti - Patentanwälte Partnerschaft mbB
(86) Internationale Anmeldenummer: PCT/EP2019/000278
(87) Internationale Veröffentlichungsnummer: WO 2020/098966

(56) Entgegenhaltungen:
- EP-A1- 3 219 291
- US-A1- 2011 041 271

## Beschreibung

Die Erfindung betrifft einen Interdental-Reiniger mit einem stabförmigen Träger aus Kunststoff, der in seinem hinteren Endbereich ein Griffteil aufweist und in seinem entgegengesetzten vorderen Endbereich einen Überzug aus einem weich-elastischen Kunststoff trägt, wobei auf der Außenseite des Überzugs zumindest ein radial hervorstehender Finger angeordnet ist, der einstückig mit dem Überzug verbunden ist. Zur Reinigung der Zahnzwischenräume werden üblicherweise Zahnstocher aus Holz oder Kunststoff oder auch Interdental-Bürsten verwendet. Der frühere konstruktive Aufbau einer Interdental-Bürste bestand aus zwei parallel angeordneten Metalldrähten, zwischen denen eine Vielzahl von vorgefertigten Kunststoffborsten angeordnet sind. Die Metalldrähte sind um ihre Längsachse tordiert, wodurch die Borsten zwischen den Metalldrähten eingeklemmt und über den Umfang der Metalldrähte verteilt sind. Eine entsprechende Interdental-Bürste ermöglicht es, mit den feinen Borsten auch in enge Zahnzwischenräume zu gelangen, wobei die Borsten sowohl eine hohe Flexibilität als auch ein sehr gutes Wiederaufrichtvermögen besitzen. Nachteilig bei diesen sogenannten drahtgebundenen Interdental-Bürsten ist einerseits die aufwändige und teure Herstellung und andererseits die Verwendung von Metalldrähten, die viele Anwender nicht gerne im Mund haben.

Um die genannten Interdental-Bürsten zu verbessern, sind Interdental-Reiniger aus Kunststoff entwickelt worden, die einen stabförmigen Träger aus Kunststoff aufweisen, der an seinem hinteren Ende ein üblicherweise plattenförmiges Griffteil besitzt. Am vorderen Ende des Trägers ist ein Überzug aus einem weich elastischen Kunststoff, beispielsweise einem thermoplastischen Elastomer oder aus Silikon aufgespritzt. Um die Reinigungswirkung zu verbessern, besitzt der Überzug auf seiner Außenseite radial hervorstehende Finger, die aus dem gleichen Material wie der Überzug bestehen und einstückig mit diesem ausgebildet sind. Die Finger sollen bei Anwendung des Interdental-Reinigers die Funktion der Borsten der genannten Interdental-Bürste übernehmen. Entsprechende Interdental-Bürsten sind beispielsweise aus der DE 10 2012 015 664 A1, der US 2018/0193119 A1 und der WO2014/167592 A1 bekannt.

Auch die US 2011/0041271 A1 und die EP 3 219 291 A1, von der im Oberbegriff des Anspruchs 1 ausgegangen wird, zeigen entsprechende Interdental-Reiniger.

Um auch in enge Zahnzwischenräume zu gelangen, müssen die Querschnittsabmessungen der Finger möglichst gering sein. Dem steht jedoch die Forderung entgegen, dass die Finger eine ausreichende Flexibilität und Stabilität aufweisen müssen, um bei Gebrauch des Interdental-Reinigers nicht abzureißen oder zu knicken. Wenn man die Finger mit einem größeren Durchmesser oder einem größeren Anbindungsradius (Radius der Ausrundung am Fuß des Fingers) ausbildet, um das Abbrechen oder Knicken zu verhindern, ist es schwer, sehr enge Spalte oder Zahnzwischenräume zu erreichen und zu säubern.

Der Erfindung liegt die Aufgabe zugrunde, einen Interdental-Reiniger der genannten Art zu schaffen, bei dem die Finger geringe Abmessungen aufweisen können, ohne dass die Gefahr des Abbrechens oder Knickens besteht.

Diese Aufgabe wird erfindungsgemäß durch einen Interdental-Reiniger mit den Merkmalen des Anspruchs 1 gelöst. Dabei ist vorgesehen, dass auf der Außenoberfläche des Überzugs eine Vertiefung ausgebildet ist und dass der Finger mit seinem radial inneren Fußbereich in der Vertiefung angeordnet und an einem Boden der Vertiefung mit dem Überzug verbunden ist.

Die Erfindung geht von der Grundüberlegung aus, den Finger nicht einfach auf der Außenoberfläche des Überzugs anzuformen, sondern den Verbindungsbereich zwischen dem Überzug und dem Finger von der Außenoberfläche des Überzugs um ein geringes Maß radial nach innen, d.h. in Richtung des Trägers des Interdental-Reinigers zu versetzen. Dies führt dazu, dass die bei Verwendung des Interdental-Reinigers auf den Finger einwirkenden äußeren Belastungen immer in einem Abstand zu dem Fußbereich des Fingers einwirken, so dass der Finger infolge dieser Belastungen ausweichen kann, ohne abzureißen oder zu knicken.

Der Begriff "axial" bezeichnet in dieser Beschreibung eine Richtung entlang einer Längsachse des stabförmigen Trägers und somit des Interdental-Reinigers oder parallel dazu. Der Begriff "radial" bezeichnet eine senkrecht zur Längsachse des Interdental-Reinigers verlaufende Richtung.

Vorzugsweise sind auf der Außenoberfläche eine Vielzahl von radial hervorstehenden Fingern vorgesehen, von denen mehrere und vorzugsweise alle mit ihrem radial inneren Fußbereich in einer Vertiefung in genannter Weise angeformt sind. Dabei ist vorzugsweise für jeden Finger eine eigene Vertiefung vorgesehen. Im Folgenden wird beispielhaft nur ein einzelner Finger erläutert.

Die Vertiefung in dem Überzug führt zu einer Verringerung der Wandstärke des Überzugs in diesem Bereich. Dies sorgt dafür, dass das Kunstsoff-Material des Überzugs und der Finger während des Spritzvorgangs mit einer erhöhten Fließgeschwindigkeit in die den Finger formende Teilkavität einströmt, was wiederrum zu einer stärkeren Längsorientierung der Makromoleküle des Kunststoffmaterials innerhalb des jeweiligen Fingers führt. Diese Längsorientierung der Makromoleküle des Kunststoff-Materials verbessert das Wiederaufrichtverhalten des Fingers.

In bevorzugter Ausgestaltung der Erfindung ist vorgesehen, dass der Finger in seinem Fußbereich stetig und kantenlos in den Überzug übergeht. Dies kann beispielsweise dadurch erreicht werden, dass der Übergang zwischen dem unteren Ende bzw. dem Fußbereich des Fingers und dem Boden der Vertiefung über einen abgerundeten kontinuierlichen Übergangsbereich verbunden ist. Auf diese Weise sind Kanten, Ecken oder sonstige Unstetigkeitsstellen, die zu Kerbspannungen führen können, zuverlässig vermieden. Dieser ausgerundete Übergangsbereich liegt vorzugsweise vollständig innerhalb der Vertiefung. Auf diese Weise wird die radiale Dicke des Überzugs durch den Übergangsbereich nicht erhöht.

Es hat sich als vorteilhaft erwiesen, wenn der Träger aus einem formstabilen Kunststoff, insbesondere Polyprophylen oder Polyamid besteht und/oder die genannten Materialien überwiegend oder in einer Mischung enthält. Alternativ kann der Träger auch aus Polybutylenterephthalat, Polyester, Polyethylen oder auch aus einem schlagzäh modifizierten Kunststoff wie Polycarbonat oder Polystyrol bestehen oder die genannten Materialien überwiegend oder in einer Mischung enthalten. Das Kunststoff-Material des Trägers kann faserverstärkt sein, wofür beispielsweise Glasfasern und/oder Naturfasern und/oder Karbonfasern Verwendung finden können.

Der Überzug und der Finger können vollständig oder zumindest überwiegend aus einem thermoplastischen Elastomer beispielsweise mit einer Shore-Härte von 20 bis 80 Shore und insbesondere mit einer Shore-Härte von 20 bis 40 Shore, aus einem thermoplastischen Polyuretan oder aus Silikon bestehen oder die genannten Materialien überwiegend oder in einer Mischung enthalten. Gegebenenfalls kann ein weiterer Kunststoff, insbesondere Polyprophylen und/oder Polyethylen anteilig verwendet oder anteilig hinzugegeben sein.

In einer möglichen Ausgestaltung der Erfindung kann vorgesehen sein, dass der Fußbereich des Fingers von einer vollständig umlaufenden Ringnut umgeben ist. Somit ist der Fußbereich des Fingers nur an dem Boden der Vertiefung mit dem Überzug verbunden, jedoch steht der Fußbereich des Fingers in Umfangsrichtung frei. Dies bringt den Vorteil mit sich, dass sich der Finger bei Einwirkung von Scherkräften und/oder Biegemomenten innerhalb der Vertiefung verbiegen kann, was insbesondere bei dem Einführen des InterdentalReinigers in enge Zahnzwischenräume hilfreich ist. Der Anbindungsbereich am Fuß des Fingers bzw. der Anbindungsradius hindert somit die Funktionalität des Fingers bei Gebrauch nicht.

In alternativer Ausgestaltung der Erfindung kann vorgesehen sein, dass der Fußbereich des Fingers von mehreren, sich jeweils über einen Abschnitt des Umfangs des Fingers erstreckenden Ringnutabschnitten umgeben ist. Somit steht der Finger nicht vollständig frei auf dem Boden der Vertiefung, sondern ist zusätzlich mit einer Seitenwand der Vertiefung verbunden. Insbesondere kann das dadurch erreicht werden, dass zumindest ein innerhalb der Vertiefung angeordneter Steg vorgesehen ist, der den Fußbereich des Fingers mit der Seitenwand der Vertiefung verbindet. Der Steg besteht aus dem gleichen Material wie der Überzug und der Finger und ist mit diesen einstückig verbunden.

Bei Benutzung des Interdental-Reinigers ergreift der Anwender diesen am Griffabschnitt und führt ihn in Längsrichtung des Interdentalreinigers in die Zahnzwischenräume ein. Deshalb sollte vorzugsweise vorgesehen sein, dass die Biegung des Fingers in Axialrichtung bzw. in Richtung der Längsachse des Interdental-Reinigers nicht behindert ist. Dementsprechend kann vorgesehen sein, dass der Steg in seiner Längserstreckung deutlich von der Längsachse des Interdental-Reinigers abweicht. Insbesondere ist vorgesehen, dass der Steg sich unter einem Winkel α zu der Längsachse des Interdental-Reinigers erstreckt, wobei α im Bereich von 30 bis 90° liegt.

Über die Anzahl und/oder die Ausrichtung und/oder die Abmessungen des Stegs oder der Stege können die Lagerungseigenschaften des Fingers in der Vertiefung bzw. am Überzug verändert werden. In einer möglichen Ausgestaltung der Erfindung kann vorgesehen sein, dass zumindest zwei Stege auf entgegengesetzten Seiten des Fingers angeordnet sind. Es ist jedoch auch möglich, dass drei oder vier Stege über den Umfang des Fingers verteilt angeordnet sind.

Der Finger besitzt vorzugsweise eine konische, in Richtung seines freien Endes verjüngende Form. Aufgrund der Anordnung des Fußbereichs des Fingers innerhalb der Vertiefung kann der Finger relativ schlank ausgestaltet sein. Die Schlankheit sei definiert als die frei auskragende Länge des Fingers geteilt durch den Fußdurchmesser. Der Fußdurchmesser wird in der Querschnittsebene des Fingers gemessen, die in der von der Außenoberfläche des Überzugs definierten Fläche liegt. Die Länge des Fingers wird gemessen von der genannten Querschnittsebene bis zum freien Ende des Fingers. Vorzugsweise sollte die entsprechende Schlankheit des Fingers im Bereich von 2 bis 10 und insbesondere im Bereich von 4,0 bis 6,0 liegen.

Eine Tiefe der Vertiefung, d.h. der Abstand des Bodens der Vertiefung von der die Vertiefung umgebenden Außenoberfläche des Überzugs sollte im Bereich von 0,02mm bis 0,20mm und insbesondere im Bereich von 0,04mm bis 0,08mm liegen.

Der Durchmesser des Fingers in der genannten Querschnittsebene sollte im Bereich von 0,10mm bis 0,30mm und insbesondere im Bereich von 0,15mm bis 0,25mm liegen.

Die genannte Länge des Fingers liegt beispielsweise im Bereich von 0,5mm bis 2,0mm und beträgt vorzugsweise 0,8mm bis 1,2mm.

In bevorzugter Ausgestaltung der Erfindung ist vorgesehen, dass die Vertiefung kreisförmig ist und einen Durchmesser im Bereich von 0,20mm bis 0,60mm und insbesondere im Bereich von 0,35mm bis 0,45mm besitzt.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: Eine perspektivische Darstellung eines erfindungsgemäßen Interdental-Reinigers
- Fig. 2: eine vergrößerte Schnittdarstellung des Interdental-Reinigers im Bereich eines Fingers,
- Fig. 3: die Aufsicht III auf den Finger gemäß Figur 2,
- Fig. 4: eine erste Abwandlung der Ausgestaltung gemäß Figur 3 und
- Fig. 5: eine zweite Abwandlung der Ausgestaltung gemäß Figur 3.

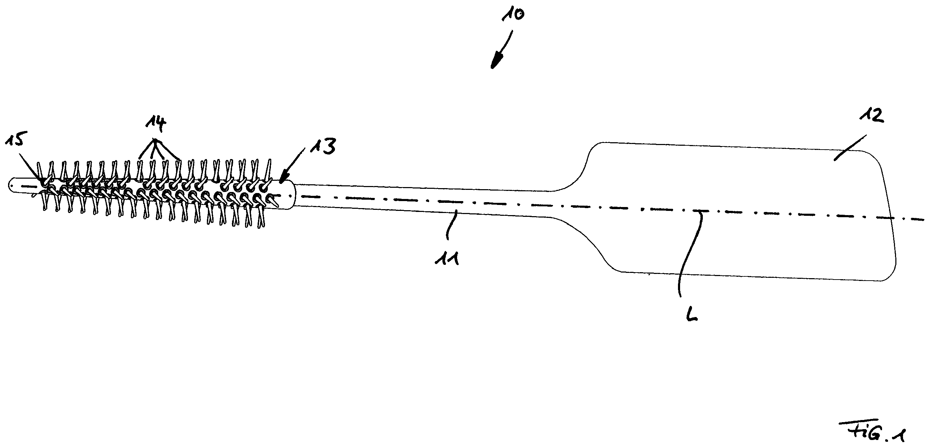

Figur 1 zeigt eine perspektivische Ansicht eines erfindungsgemäßen Interdental-Reinigers 10, der einen stabförmigen Träger 11 aufweist. Der Träger 11 besitzt eine axiale Längsachse L und besteht vorzugsweise aus einem harten bzw. formstabilen Kunststoffmaterial.

In seinem gemäß Figur 1 rechten Endbereich besitzt der Träger 11 ein plattenförmiges Griffteil 12, das einstückig mit dem Träger 11 verbunden ist. An dem Griffteil 12 kann ein Benutzer den Interdental-Reiniger 10 erfassen.

Im entgegengesetzten, gemäß Figur 1 linken Endbereich ist auf dem Träger 11 ein hülsenartiger Überzug 13 aus einem weichen Kunststoffmaterial, insbesondere einem thermoplastischen Elastomer angeordnet, wobei der Überzug 13 auf seiner Außenseite radial nach außen hervorstehende, einstückig angeformte Finger 14 trägt. Jeder Finger 14 ist in einer eigenen Vertiefung 15 angeordnet, die auf der Außenoberfläche des Überzugs 13 ausgebildet ist.

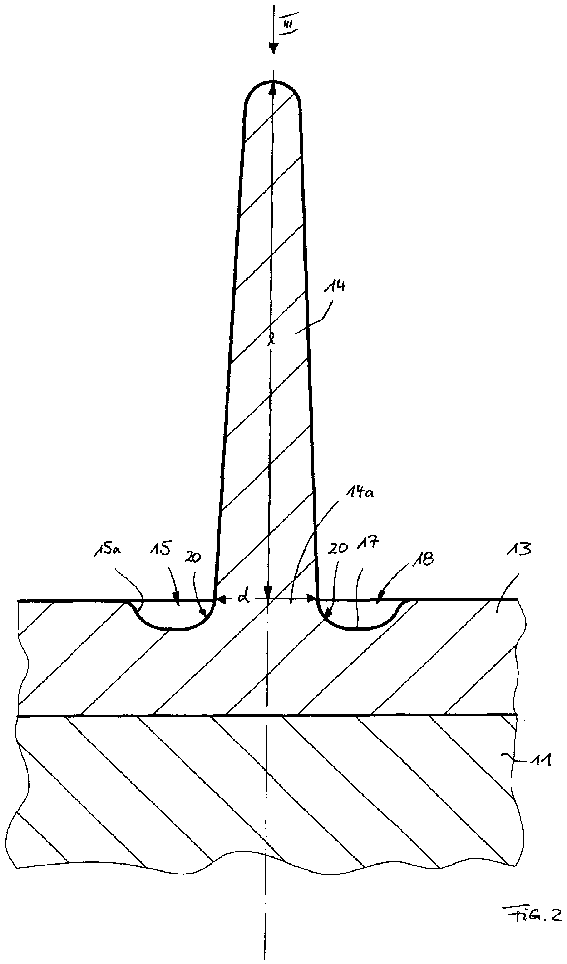

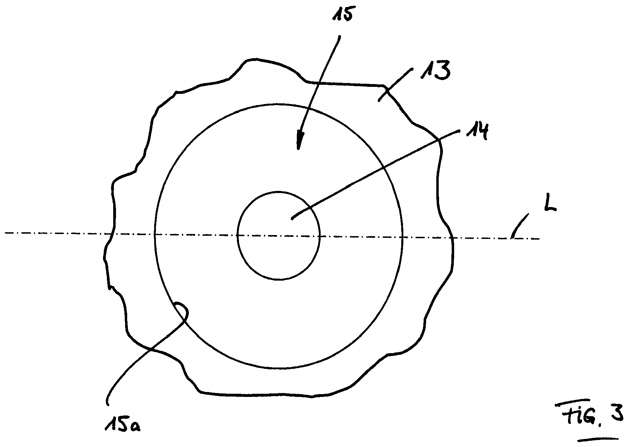

Aus den Figuren 2 und 3 ist ersichtlich, wie die Finger 14 jeweils an den Überzug 13 angeformt sind.

Wie Figur 3 zeigt, ist die Vertiefung 15 im wesentlichen kreisförmig und besitzt eine umlaufende vorzugsweise konisch ausgestaltete Seitenwand 15a und einen Boden 17. Der Finger 14 besitzt eine sich zu seinem radial äußeren, freien Ende hin konisch verjüngenden Form und ist in einem Fußbereich 14a am Boden 17 der Vertiefung 15 mit dem Überzug 13 einstückig, d.h. monolithisch verbunden. Der Finger 14 steht frei innerhalb der Vertiefung 15, d.h. der Fußbereich 14a des Fingers 14 ist von einer vollständig umlaufenden Ringnut 18 umgeben.

Eine Schlankheit des Fingers 14 ist definiert als Quotient aus seiner frei auskragenden Länge 1 und dem Fußdurchmesser d. Wie aus Figur 2 ersichtlich ist, wird der entsprechende Fußdurchmesser d in derjenigen Ebene gemessen, in der die Außenoberfläche des Überzugs 13 liegt. Die Länge 1 des Fingers 14 ergibt sich aus dem Abstand der genannten Ebene zum radial äußeren, freien Ende des Fingers 14. Beim dargestellten Ausführungsbeispiel besitzt der Finger eine Schlankheit von etwa 5, d.h. seine Länge 1 ist fünfmal größer als sein Fußdurchmesser d.

Der Fußbereich 14a des Fingers 14 geht stetig und kantenlos in den Boden 17 der Vertiefung 15 bzw. den Überzug 13 über, wobei am unteren Ende des Fingers Ausrundungen 20 ausgebildet sind.

Wie Figur 3 zeigt, sitzt der Finger 14 beim dargestellten Ausführungsbeispiel mittig und frei auf den Boden 17 der Ausnehmung 15, so dass der Fußbereich des Fingers 14 von der vollständig umlaufenden, kontinuierlichen Ringnut 18 umgeben ist, die von den verbleibenden Bereichen der Vertiefung 15 gebildet wird.

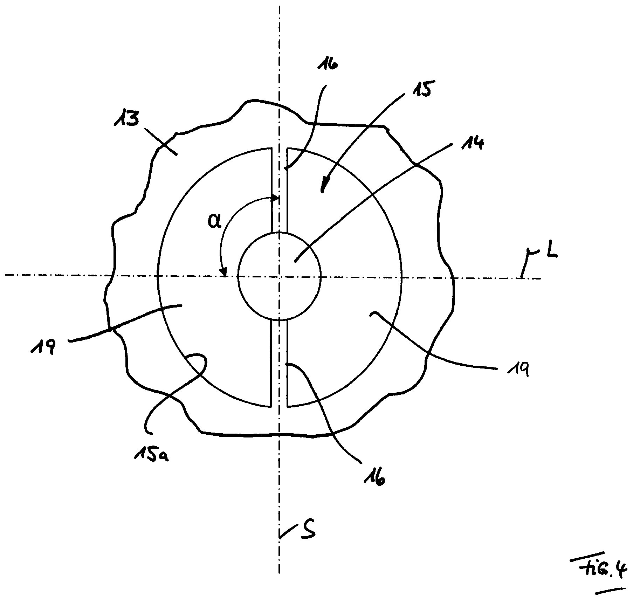

Figur 4 zeigt eine alternative Ausgestaltung des vorgenannten Ausführungsbeispiels und unterscheidet sich von diesem dadurch, dass der Fußbereich 14a des Fingers 14 über zwei innerhalb der Vertiefung 15 angeordnete Stege 16 mit der Seitenwand 15a der Vertiefung 15 verbunden ist. Die Stege 16, die aus dem gleichen Material wie der Finger 14 und der Überzug 13 bestehen und mit diesen einstückig verbunden sind, erhöhen die Steifigkeit des Fingers 14 in seinem Fußbereich 14a, wodurch die Verformungseigenschaften beeinflusst und eingestellt werden können.

Bei dem in Figur 4 dargestellten Ausführungsbeispiel sind zwei Stege 16 auf entgegengesetzten Seiten des Fingers 14 angeordnet, wobei diese beiden Stege 16 miteinander fluchten und entlang einer Achse S verlaufen, die im dargestellten Ausführungsbeispiel unter einem Winkel α von 90° zur Längsachse L des Interdental-Reingers verläuft. Somit beeinflussen die Stege 16 die Verformungseigenschaften des Fingers 14 in Richtung der Längsachse L des Interdentalreinigers 10 und somit beim ordnungsgemäßen Gebrauch des Interdentalreinigers 10 nicht oder nur in sehr geringem Maße, während die Verformungseigenschaften senkrecht dazu, d.h. in Richtung der Achse S durch die Stege 16 wesentlich beeinflusst sind.

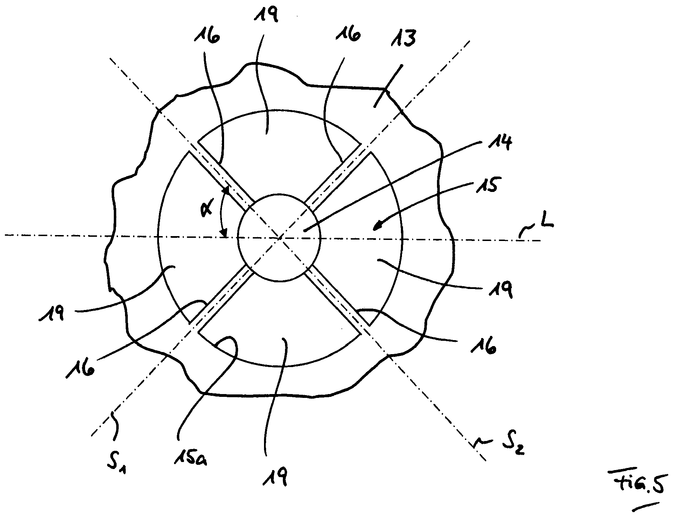

Figur 5 zeigt eine Weiterbildung der Ausgestaltung gemäß Figur 4 und unterscheidet sich von dieser dadurch, dass nunmehr vier Stege 16 vorgesehen sind, die gleichmäßig über den Umfang des Fingers 14 verteilt angeordnet sind. Jeweils zwei Stege 16 sind gegenüberliegend angeordnet und liegen auf einer gemeinsamen Achse S₁ bzw. S₂. Die beiden Achsen S₁ und S₂ stehen senkrecht aufeinander und verlaufen unter einem Winkel α von 45° zu der Längsachse L des InterdentalReinigers 10.

## Patentansprüche

1. Interdental-Reiniger (10) mit einem stabförmigen Träger (11) aus Kunststoff, der in seinem hinteren Endbereich ein Griffteil (12) aufweist und in seinem entgegengesetzten vorderen Endbereich einen Überzug (13) aus einem weich-elastischen Kunststoff trägt, wobei auf der Außenseite des Überzugs (13) zumindest ein radial hervorstehender Finger (14) angeordnet ist, der einstückig mit dem Überzug (13) verbunden ist, **dadurch gekennzeichnet, dass** auf der Außenoberfläche des Überzugs (13) eine Vertiefung (15) ausgebildet ist und dass der Finger (14) mit seinem radial inneren Fußbereich (14a) in der Vertiefung (15) angeordnet und an einem Boden (17) der Vertiefung (15) mit dem Überzug (13) verbunden ist.

2. Interdental-Reiniger nach Anspruch 1, **dadurch gekennzeichnet, dass** der Finger (14) in seinem Fußbereich (14a) stetig und kantenlos in den Überzug (13) übergeht.

3. Interdental-Reiniger nach Anspruch 1 oder 2, **dadurch gekennzeichnet, dass** der Fußbereich (14a) des Fingers (14) von einer vollständig umlaufenden Ringnut (19) umgeben ist.

4. Interdental-Reiniger nach Anspruch 1 oder 2, **dadurch gekennzeichnet, dass** der Fußbereich (14a) des Fingers (14) von mehreren, sich jeweils über einen Abschnitt des Umfangs des Fingers (14) erstreckenden Ringnutabschnitten (20) umgeben ist.

5. Interdental-Reiniger nach einem der Ansprüche 1 bis 4, **dadurch gekennzeichnet, dass** zumindest ein innerhalb der Vertiefung (15) angeordneter Steg (16) vorgesehen ist, der den Fußbereich (14a) des Fingers (14) mit einer Seitenwand (15a) der Vertiefung (15) verbindet.

6. Interdental-Reiniger nach Anspruch 5, **dadurch gekennzeichnet, dass** der Steg (16) sich unter einem Winkel α zu einer Längsachse (L) des Interdental-Reinigers (10) erstreckt, wobei α im Bereich von 30° bis 90° liegt.

7. Interdental-Reiniger nach Anspruch 5 oder 6, **dadurch gekennzeichnet, dass** zumindest zwei Stege (16) auf entgegengesetzten Seiten des Fingers (14) angeordnet sind.

8. Interdental-Reiniger nach Anspruch 7, **dadurch gekennzeichnet, dass** drei oder vier Stege (16) über den Umfang des Fingers (14) verteilt angeordnet sind.

9. Interdental-Reiniger nach einem der Ansprüche 1 bis 8, **dadurch gekennzeichnet, dass** der Finger (14) eine Schlankheit = Länge l/Fußdurchmesser d im Bereich von 2 bis 10 aufweist, wobei der Fußdurchmesser d in derjenigen Ebene gemessen wird, in der die Außenoberfläche des Überzugs (13) liegt, und wobei die Länge 1 der Abstand der genannten Ebene zum radial äußeren, freien Ende des Fingers (14) ist.

10. Interdental-Reiniger nach Anspruch 9, **dadurch gekennzeichnet, dass** der Finger (14) eine Schlankheit im Bereich von 4,0 bis 6,0 aufweist.

11. Interdental-Reiniger nach einem der Ansprüche 1 bis 10, **dadurch gekennzeichnet, dass** eine Tiefe (t) der Vertiefung (15) im Bereich von 0,02mm bis 0,20mm liegt.

12. Interdental-Reiniger nach Anspruch 11, **dadurch gekennzeichnet, dass** die Tiefe (t) der Vertiefung (15) im Bereich von 0,04mm bis 0,08mm liegt.

13. Interdental-Reiniger nach einem der Ansprüche 1 bis 12, **dadurch gekennzeichnet, dass** die Vertiefung (14) kreisförmig ist und einen Durchmesser im Bereich von 0,20mm bis 0,60mm aufweist.

## Claims

1. Interdental cleaner (10) comprising a rod-shaped support (11) which is made of plastics material and the rear end region of which has a handle part (12) and the opposite front end region of which supports a coating (13) made of a soft-elastic plastics material, at least one radially protruding finger (14) which is integrally connected to the coating (13) being arranged on the outside of the coating (13), **characterized in that** a recess (15) is formed in the outer surface of the coating (13), and **in that** the radially inner foot region (14a) of the finger (14) is arranged in the recess (15) and is connected to the coating (13) at a bottom (17) of the recess (15).

2. Interdental cleaner according to claim 1, **characterized in that** the foot region (14a) of the finger (14) transitions continuously and in an edge-free manner into the coating (13).

3. Interdental cleaner according to either claim 1 or claim 2, **characterized in that** the foot region (14a) of the finger (14) is surrounded by a completely circumferential annular groove (19).

4. Interdental cleaner according to either claim 1 or claim 2, **characterized in that** the foot region (14a) of the finger (14) is surrounded by a plurality of annular groove portions (20) each extending over a portion of the circumference of the finger (14).

5. Interdental cleaner according to any of claims 1 to 4, **characterized in that** at least one connecting portion (16) arranged within the recess (15) is provided which connects the foot region (14a) of the finger (14) to a side wall (15a) of the recess (15).

6. Interdental cleaner according to claim 5, **characterized in that** the connecting portion (16) extends at an angle α to a longitudinal axis (L) of the interdental cleaner (10), α being in the range of from 30° to 90°.

7. Interdental cleaner according to either claim 5 or claim 6, **characterized in that** at least two connecting portions (16) are arranged on opposite sides of the finger (14).

8. Interdental cleaner according to claim 7, **characterized in that** three or four connecting portions (16) are arranged so as to be distributed over the circumference of the finger (14).

9. Interdental cleaner according to any of claims 1 to 8, **characterized in that** the finger (14) has a slenderness (= length l/foot diameter d) in the range of from 2 to 10, wherein the foot diameter d is measured in a plane containing the outer surface of said coating (13) and wherein the length 1 is the distance of said plane from the radial outer, free end of said finger (14).

10. Interdental cleaner according to claim 9, **characterized in that** the finger (14) has a slenderness in the range of from 4.0 to 6.0.

11. Interdental cleaner according to any of claims 1 to 10, **characterized in that** a depth (t) of the recess (15) is in the range of from 0.02 mm to 0.20 mm.

12. Interdental cleaner according to claim 11, **characterized in that** the depth (t) of the recess (15) is in the range of from 0.04 mm to 0.08 mm.

13. Interdental cleaner according to any of claims 1 to 12, **characterized in that** the recess (14) is circular and has a diameter in the range of from 0.20 mm to 0.60 mm.

## Revendications

1. Dispositif de nettoyage interdentaire (10) doté d'un support en forme de tige (11) en matière plastique qui comporte dans sa zone d'extrémité arrière une partie de manche (12) et dans sa zone d'extrémité avant opposée un recouvrement (13) réalisé à partir d'une matière plastique souple et élastique, dans lequel au moins un doigt (14) saillant dans le plan radial est disposé sur le côté extérieur du recouvrement (13), ledit doigt étant relié d'un seul tenant au recouvrement (13), **caractérisé en ce qu'**un renfoncement (15) est réalisé sur la surface extérieure du recouvrement (13) et que le doigt (14) est disposé dans le renfoncement (15) avec sa zone d'embase (14a) intérieure dans le plan radial et est relié au recouvrement (13) au niveau d'un plancher (17) du renfoncement (15).

2. Dispositif de nettoyage interdentaire selon la revendication 1, **caractérisé en ce que** le doigt (14) se situant dans sa zone d'embase (14a) se transforme de façon continue et sans arête en recouvrement (13).

3. Dispositif de nettoyage interdentaire selon la revendication 1 ou 2, **caractérisé en ce que** la zone d'embase (14a) du doigt (14) est entourée par une rainure annulaire (19) le ceignant entièrement.

4. Dispositif de nettoyage interdentaire selon la revendication 1 ou 2, **caractérisé en ce que** la zone d'embase (14a) du doigt (14) est entourée par plusieurs sections de rainure annulaire (20) s'étendant respectivement sur une section de la périphérie du doigt (14).

5. Dispositif de nettoyage interdentaire selon l'une quelconque des revendications 1 à 4, **caractérisé en ce qu'**au moins un étai (16) disposé à l'intérieur du renfoncement (15) est prévu, ledit étai reliant la zone d'embase (14a) du doigt (14) à une paroi latérale (15a) du renfoncement (15).

6. Dispositif de nettoyage interdentaire selon la revendication 5, **caractérisé en ce que** l'étai (16) s'étend selon un angle α par rapport à un axe longitudinal (L) du dispositif de nettoyage interdentaire (10), α étant situé dans la plage allant de 30° à 90°.

7. Dispositif de nettoyage interdentaire selon la revendication 5 ou 6, **caractérisé en ce qu'**au moins deux étais (16) sont disposés sur les côtés opposés du doigt (14).

8. Dispositif de nettoyage interdentaire selon la revendication 7, **caractérisé en ce que** trois ou quatre étais (16) sont disposés de façon à être répartis sur l'ensemble de la circonférence du doigt (14).

9. Dispositif de nettoyage interdentaire selon l'une quelconque des revendications 1 à 8, **caractérisé en ce que** le doigt (14) comporte un allongement = longueur l/diamètre d'embase d compris dans la plage allant de 2 à 10, dans lequel le diamètre d'embase d est mesuré dans le plan de la surface extérieure du recouvrement (13) et dans lequel la longueur l correspond à la distance entre ledit plan et l'extrémité libre extérieure dans le plan radial du doigt (14).

10. Dispositif de nettoyage interdentaire selon la revendication 9, **caractérisé en ce que** le doigt (14) comporte un allongement compris dans la plage allant de 4,0 à 6,0.

11. Dispositif de nettoyage interdentaire selon l'une quelconque des revendications 1 à 10, **caractérisé en ce qu'**une profondeur (t) du renfoncement (15) se situe dans la plage allant de 0,02 mm à 0,20 mm.

12. Dispositif de nettoyage interdentaire selon la revendication 11, **caractérisé en ce que** la profondeur (L) du renfoncement (15) se situe dans la plage allant de 0,04 mm à 0,08 mm.

13. Dispositif de nettoyage interdentaire selon l'une quelconque des revendications 1 à 12, **caractérisé en ce que** le renfoncement (14) est de forme circulaire et présente un diamètre compris dans la plage de 0,20 mm à 0,60 mm.
